(19) Europäisches Patentamt / European Patent Office / Office européen des brevets

(11) **EP 4 321 443 A1**

(12) **EUROPEAN PATENT APPLICATION**

(43) Date of publication:
**14.02.2024 Bulletin 2024/07**

(21) Application number: **22189602.0**

(22) Date of filing: **09.08.2022**

(51) International Patent Classification (IPC):
**B64G 1/22** (2006.01)　　**E05D 1/00** (2006.01)
**E05F 1/12** (2006.01)　　**F16C 11/12** (2006.01)

(52) Cooperative Patent Classification (CPC):
**B64G 1/22; B64G 1/222; F16C 11/12;**
E05F 1/1284; E05Y 2900/502; F16C 2326/47

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ClearSpace SA**
**1020 Renens (CH)**

(72) Inventors:
• **MUKHERJEE, Aghna**
**8044 Zurich (CH)**
• **TARTER, Edouard**
**8057 Zurich (CH)**
• **BOTHNER, Simon**
**1163 Etoy (CH)**
• **VIERTL, Jacques**
**1012 Lausanne (CH)**
• **ERMANNI, Paolo**
**8053 Zurich (CH)**
• **SAKOVSKY, Maria**
**Palo Alto, CA 94304 (US)**

(74) Representative: **ABREMA SA**
**Avenue du Théâtre 16**
**1005 Lausanne (CH)**

(54) **HINGE ASSEMBLY SUITABLE FOR AEROSPACE APPLICATION AND USES THEREOF**

(57)　　There is described a hinge assembly (100) suitable for aerospace application comprising first and second frame elements (110, 120) forming first and second hinge parts (100A, 100B) of the hinge assembly (100) that are moveable relative to one another about an imaginary hinge axis of the hinge assembly (100) extending in a lateral direction (z). The first and second frame elements (110, 120) of the hinge assembly (100) are linked by a tape spring structure (150) allowing the hinge assembly (100) to take at least two configurations. The tape spring structure (150) includes first and second bistable laminate elements (151, 152) with distinct tape spring properties, each of the first and second bistable laminate elements (151, 152) being configurable to take either one of two stable states, namely, an unfolded state in which each bistable laminate element (151, 152) extends predominantly rectilinearly in a longitudinal direction (x), perpendicular to the lateral direction (z), and a folded state in which each bistable laminate element (151, 152) is curved about an imaginary axis parallel to the imaginary hinge axis and forms a fold angle ($\theta_1$, $\theta_2$) within a hinge plane (x-y) perpendicular to the imaginary hinge axis. Furthermore, the first and second bistable laminate elements (151, 152) are designed and arranged in kinematically compatible configurations such that the hinge assembly (100) can take any one of a first stable configuration, when the first and second bistable laminate elements (151, 152) are both in the unfolded state, and a second stable configuration, when the first and second bistable laminate elements (151, 152) are both in the folded state.

Fig. 7

**Description**

TECHNICAL FIELD

The present invention generally relates to a hinge assembly suitable for aerospace application. More specifically, the invention relates to such a hinge assembly that relies upon the use of a tape spring structure to link first and second hinge parts of the hinge assembly and allow relative movement thereof about an imaginary hinge axis. The hinge assembly is especially applicable as part of an articulation joining two articulated segments of a deployable or reconfigurable structure for aerospace application, such as a deployable/reconfigurable boom for a spacecraft.

BACKGROUND OF THE INVENTION

Various types of hinge assemblies are known in the art, including hinge assemblies that rely upon the use of a tape spring structure to link first and second hinge parts of the hinge assembly and allow relative movement thereof about an imaginary hinge axis.

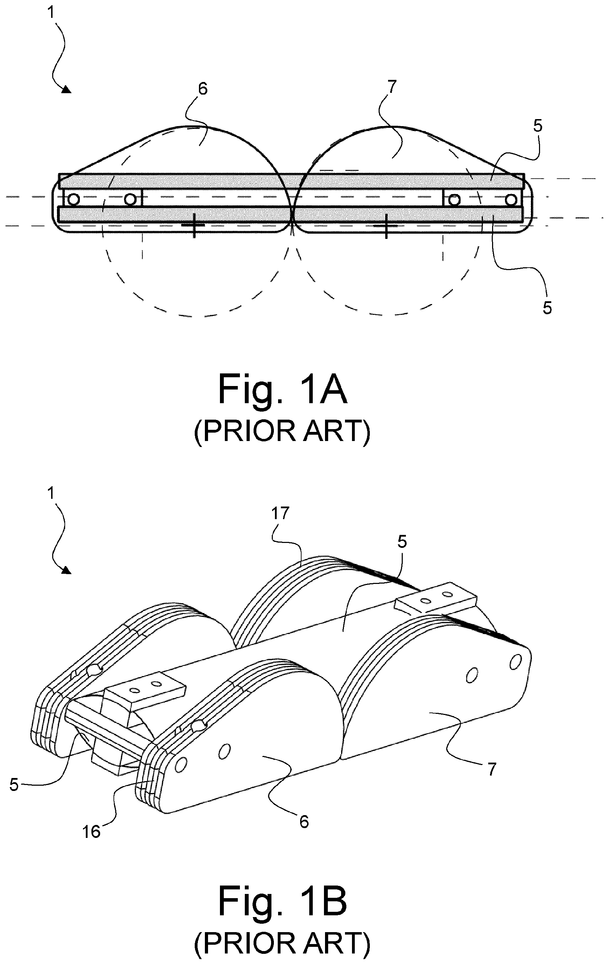

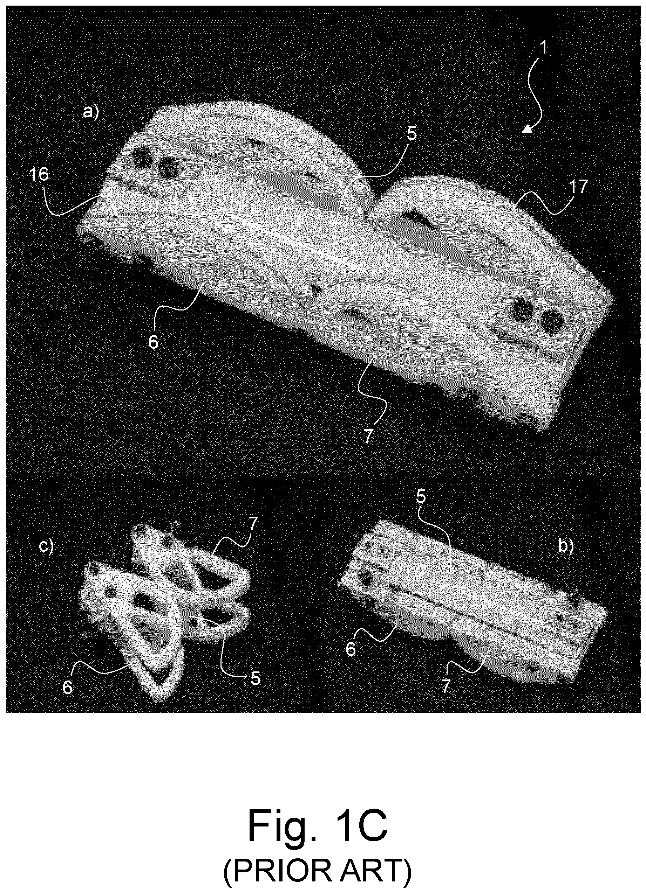

Monostable and bistable tape springs have been previously used for deployment of deployable structure in aerospace applications. The article titled "Tape-Spring Rolling Hinges", Alan M. WATT et al., Proceedings of the 36 Aerospace Mechanisms Symposium, Glenn Research Center, May 15-17, 2002, the content of which is incorporated herein by reference, for instance discloses a hinge assembly 1 as generally shown in Figures 1A-C. This hinge assembly 1, also referred to as tape-spring rolling (TSR) hinge, is constructed using a stack of two monostable tape springs 5, made of steel, that provide the deployment and locking moments, and a rolling hinge mechanism (also referred to as "rolamite hinge") consisting of two guiding cams 6, 7 held together by wires 16, 17 wrapped around them. The stacked pair of monostable tape springs 5 links the two guiding cams 6, 7 together, the guiding cams 6, 7 being made integral to first and second frame elements forming first and second hinge parts of the hinge assembly 1 that are moveable relative to one another about an imaginary hinge axis of the hinge assembly 1 extending in a lateral direction as shown in the photographic illustrations a) to c) of Figure 1C.

The rolamite hinge mechanism 6/7/16/17 is used to guide and constrain relative movement of the two hinge parts of the hinge assembly from the folded (stowed) configuration shown e.g. in illustration c) of Figure 1C to the unfolded (deployed) configuration shown e.g. in Figures 1A-B and illustrations a) and b) of Figure 1C.

One will appreciate and understand that, in the TSR hinge assembly 1 of Figures 1A-C, elastic strain energy is stored in the tape springs 5 in the folded state and that a holding/latching mechanism is in effect used to hold the hinge assembly 1 in the folded configuration until deployment. Upon deployment, the holding mechanism is released to free the tape springs 5 and allow them to return to their stable, unfolded states as shown e.g. in Figures 1A-B and illustrations a) and b) of Figure 1C.

The TSR hinge assembly 1 of Figures 1A-C is not as such meant or designed to be reversibly actuatable, it being noted that switching to the folded configuration requires application of external force to counteract the natural tendency of the tape springs 5 to return to their stable, unfolded state. In practice, the TSR hinge assembly 1 of Figures 1A-C is only intended to be used for single-use deployment.

One further example is the so-called "MAEVA" hinge assembly which has been used in orbit to deploy MYRIADE microsatellites' solar arrays, antennas and boom structures, as disclosed e.g. in "APPLICATION OF "MAEVA" HINGE TO MYRIADE MICROSATELLITES DEPLOYMENTS NEEDS", Jacques SICRE et al., Proceedings of the 11th European Space Mechanisms and Tribology Symposium, ESMATS 2005, September 21-23, 2005, Lucerne, Switzerland (see also International (PCT) Publication No. WO 98/22343 A1 and related European Patent No. EP 0 939 727 B1 and U.S. Patent No. US 6,334,235 B2). This solution likewise necessitates the provision of a holding/latching mechanism to hold or latch the deployable structure in the folded (stowed) configuration and is not specifically designed to be reversibly actuatable.

Similar mechanical latching mechanisms have been used in other applications for tailoring the degrees of freedom and stiffness of such lightweight structural elements. There are several examples of monostable (and bistable) tape spring hinge assemblies for aerospace applications, but most of these applications have focussed on deployment.

Active solutions for controlling deployment of tape spring hinge assemblies have also been proposed. In recent years, there has been a lot of developments in energy-dense smart materials like shape memory alloys (SMAs), macro-fiber composites (MFCs), and electro-active polymers (EAPs). The use of these smart materials instead of conventional electromechanical actuators or latch mechanisms saves space and reduces mass and maintenance costs. Conventional electromechanical actuators like servomotors and pneumatic actuators have many moving parts, hence they have a high maintenance cost and are prone to failures. The space and mass budget for miniature actuation systems is often relatively low. In such scenarios, smart materials are therefore the most sensible choice.

Solutions that exploit the shape memory effect (SME) of SMAs to cause deployment of a hinge assembly have been proposed. One such example is described in "Validation Report for the EO-1 Lightweight Flexible Solar Array Experiment", Bernie CARPENTER et al., Technical Report, NASA Goddard Space Flight Center, Greenbelt, MD, USA, January 15, 2001. A further example of a tape spring hinge using SMA actuators for deployment is disclosed in "A novel tape spring hinge mechanism for quasi-static deployment of a satellite deployable using shape memory alloy", Ju Won JEONG et al.. Review of Scientific Instruments 85, 025001, AIP Publishing, February 2014 (http://dx.doi.org/10.1063/1.4862470).

Bistable laminate elements may also be used as tape springs. Bistable laminate elements are a class of structural elements that have more than one stable equilibrium state. It is possible to switch from one equilibrium state to the other by applying a small load, which makes these bistable laminate elements perfect for lightweight applications. In the literature, bistable laminate elements have been employed to design lightweight morphing airplanes, energy harvesting systems, and in many soft robotics applications. Reference can be made for instance to "Flytrap-inspired robot using structurally integrated actuation based on bistability and a developable surface", Seung-Won KIM et al., Bioinspiration & Biomimetics, Volume 9, Number 3, 9 036004, March 11, 2014 (http://dx.doi.org/10.1088/1748-3182/9/3/036004) and "A Review on Bistable Composite Laminates for Morphing and Energy Harvesting", Samir A. EMAM et al., Applied Mechanics Reviews, Volume 67, Number 6, December 11, 2015 (https://dx.doi.org/10.1115/1.4032037).

In the literature, it has been shown that certain thin composite plates and shells possess more than one stable state. Several bistability mechanisms can be implemented, like thermal bucking due to the curing step, mechanical prestressing, and bistability by virtue of the geometry. While the literature shows several applications of bistable laminate elements manufactured by thermal prestressing, such solutions are not suitable for application in space. Bistable laminate elements produced by mechanical prestressing are highly sensitive to temperature, and hence cannot be used for space applications as the hinge assembly may be subjected to a substantial change in temperature depending on the orientation with respect to the Sun.

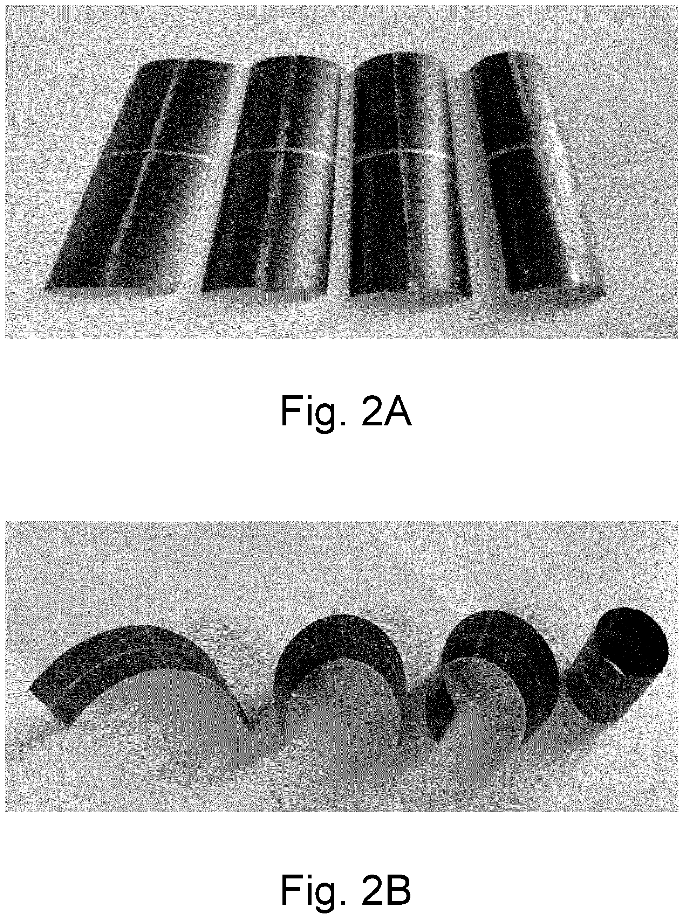

One therefore favours the use of bistable laminate elements whose bistability arises from the shell geometry, which can typically be controlled by changing the relevant composite layup and the manufacturing mould radius. Figures 2A and 2B are photographic illustrations showing the two stable states of four samples of bistable laminate elements with distinct tape spring properties. Figure 2A shows the bistable spring laminates in a first stable state, namely, an unfolded (stiff) state, whereas Figure 2B shows the same bistable spring laminates in a second stable state, namely, a folded state, exhibiting a lower stiffness compared to that of the bistable laminates in the unfolded state.

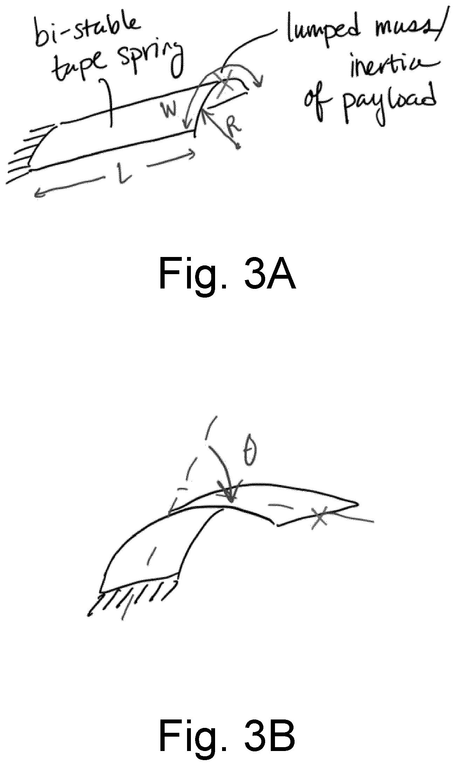

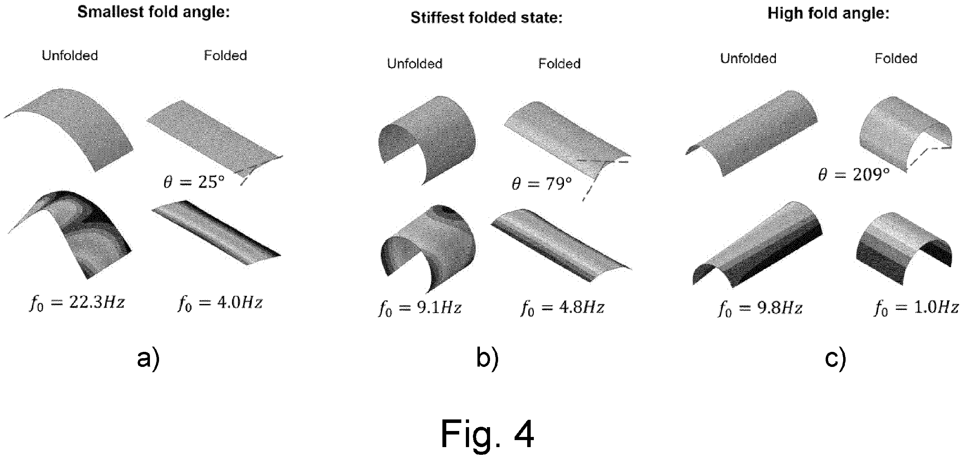

The two critical parameters that define the structural behaviour of the relevant bistable laminate element (and thus of the resulting hinge assembly) are (i) the fold angle, designated $\theta$, in the folded state (see also Figures 3B and 4) and (ii) the relevant stiffness in the two equilibrium states (see also Figure 4).

A finite element (FE) analysis of a single tape spring hinge, as schematically shown in the sketches of Figures 3A and 3B has been conducted by means of the ABAQUS® simulation software (ABAQUS® being a registered trademark of Dassault Systemes Simulia Corp.) to explore the design space of the illustrative hinge depicted in Figures 3A-B, one end of the bistable laminate element being assumed to be connected to a desired payload to be deployed. This FE analysis has been conducted assuming selected material properties of a carbon-epoxy unidirectional prepreg, namely, T700/epoxy used as the relevant material composing the illustrative bistable laminate element. The natural frequencies $f_0$ in the two equilibrium states, as well as the fold angle $\theta$, have been computed from the FE model, the natural frequencies $f_0$ in the two states being representative of the relevant stiffnesses (the higher the natural frequency $f_0$, the higher the stiffness). Illustrative results of the FE analysis are summarized in Figure 4 for three different configurations of bistable laminate elements with different tape spring properties, namely, (a) smallest fold angle, (b) stiffest folded state, and (c) high fold angle. For the sake of illustration, the FE analysis was conducted in this particular case with bistable laminate elements having the layup [45/-45/45/-45] and geometrical parameters L, W, R varying in the ranges of 20 mm to 100 mm, of 20 mm to 60 mm, and of 20° to 50°, respectively, it being understood that L, W and R respectively designate a length of the bistable laminate element (in the longitudinal direction), a width of the bistable laminate element (in the lateral direction), and a mould radius of the bistable laminate element (as schematically shown in Figure 3A).

Changing the geometric parameters of the bistable laminate element causes substantial variations in the fold angles and stiffnesses, as expected. By way of illustration, maximum stiffness in the folded state was of 4.8 Hz (as shown in illustration b) of Figure 4, which is quite low for most structural applications. Using layups with different fiber angles, the fold angles and stiffnesses can be further altered, but the analysis domain increases a lot. Furthermore, a substantial twist may be observed in certain layups, which is not desirable.

From the FE analysis, the following general observations can be made:

- shallow tape springs are not or hardly bistable;
- higher positioning resolution can be obtained using shorter tape springs with a higher mould radius;
- the minimum angular resolution that could be achieved for the particular configuration studied was 17°, hence the relevant bistable laminate elements are only suitable for applications requiring coarse positioning; and
- it is possible to tailor the tape spring hinge to structural stiffnesses which are away from the control frequencies of the spacecraft to avoid resonance.

The FE analysis was repeated for thicker bistable composite laminate elements with layups [45/-45/0/45/-45], [45/-45/45/-45/45/-45] and [45/- 45/0/0/45/-45] to provide some basis for a comparative analysis. It can be concluded that increasing the thickness of the layup substantially improves stiffnesses in both equilibrium states. However, the observed loss in bistability in the thicker designs limits stiffness tailoring by increasing the thickness.

In summary, it is possible to improve the stiffness in both equilibrium states of the bistable laminate element and achieve a good range of variability in the fold angle by changing the layup and the geometry of a single bistable laminate element. However, the achievable improvements in the stiffness based only on the layup and geometric parameters are limited. Additionally, bistable tape springs are very sensitive to boundary conditions and must be attached to a larger structure without compromising their functionality in the final application.

An alternate strategy is thus required to improve hinge stiffness further and increase the design space of hinge assemblies based on the use of bistable laminate elements. There therefore remains a need for an improved solution.

SUMMARY OF THE INVENTION

A general aim of the invention is to remedy the above-noted shortcomings of the prior art.

More precisely, an aim of the present invention is to provide a hinge assembly having improved stiffness in the unfolded (deployed) configuration and folded (stowed) configuration.

A further aim of the invention is to provide such a solution that remains compact and exhibits as low a mass as possible.

Another aim of the invention is to provide such a solution that is reasonably easy and cost-efficient to implement.

Yet another aim of the invention is to provide such a solution that can achieve full reversibility in the actuation of the hinge assembly to selectively bring the hinge assembly from one stable configuration to another, and vice versa.

A further aim of the invention is also to provide such a solution that is particularly suitable for aerospace application.

Another aim of the invention is to provide such a solution that can especially be used as part of the deployment mechanism of a deployable and/or reconfigurable structure, such as but not limited to the deployment of operational elements of a spacecraft, including solar panels, antennas, deployable booms and the like.

These aims and others are achieved thanks to the solutions defined in the claims.

There is accordingly provided a hinge assembly in accordance with a first aspect of the invention, the features of which are recited in claim 1, namely, a hinge assembly suitable for aerospace application comprising first and second frame elements forming first and second hinge parts of the hinge assembly that are moveable relative to one another about an imaginary hinge axis of the hinge assembly extending in a lateral direction. The first and second frame elements of the hinge assembly are linked by a tape spring structure allowing the hinge assembly to take at least two configurations. More specifically, according to this first aspect of the invention, the tape spring structure includes first and second bistable laminate elements with distinct tape spring properties, each of the first and second bistable laminate elements being configurable to take either one of two stable states, namely, an unfolded state in which each bistable laminate element extends predominantly rectilinearly in a longitudinal direction, perpendicular to the lateral direction, and a folded state in which each bistable laminate element is curved about an imaginary axis parallel to the imaginary hinge axis and forms a fold angle within a hinge plane perpendicular to the imaginary hinge axis. Furthermore, the first and second bistable laminate elements are designed and arranged in kinematically compatible configurations such that the hinge assembly can take any one of a first stable configuration, when the first and second bistable laminate elements are both in the unfolded state, and a second stable configuration, when the first and second bistable laminate elements are both in the folded state.

By way of preference, the first and second bistable laminate elements are offset laterally, along the lateral direction, as well as vertically, along a vertical direction, perpendicular to the longitudinal direction and the lateral direction. In this particular context, the first and second bistable laminate elements may especially be designed to satisfy the following conditions:

$$s_1 = r_{c1} \frac{s_2}{r_{c2}} \tag{1}$$

$$s_2 = \frac{r_{c2}}{r_{c1}} \left( s_2 - 2e \sin \frac{s_2}{2r_{c2}} \right) \tag{2}$$

where $s_1$ and $s_2$ are respectively a length of the first and second bistable laminate elements as measured within the hinge plane, $r_{c1}$ and $r_{c2}$ are respectively a radius of curvature of the first and second bistable laminate elements in the folded state, and e is an eccentricity as measured between centers of curvature of the first and second bistable laminate elements in the folded state.

The first bistable laminate element may advantageously link a first portion of the first frame element to a first portion of the second frame element and the second bistable laminate element may likewise advantageously link a second portion of the first frame element to a second portion of the second frame element. In this latter context, the first frame element preferably exhibits a first connecting section shaped as a fork to form the first and second portions of the first frame element that are coupled to one end of the first and second bistable laminate elements, respectively, while the second frame element likewise preferably exhibits a second connecting section shaped as a fork to form the first and second portions of the second frame element that are coupled to another end of the first and second bistable laminate elements, respectively.

The first and second bistable laminate elements may especially be composite laminates exhibiting different geometric parameters and/or different layups.

In accordance with a preferred embodiment, the hinge assembly further comprises an actuating system to selectively and reversibly switch each of the first and second bistable laminate elements from the unfolded state to the folded state, and vice versa.

There is also provided a hinge assembly in accordance with a second aspect of the invention, the features of which are recited in independent claim 7, namely, a hinge assembly suitable for aerospace application comprising first and second frame elements forming first and second hinge parts of the hinge assembly that are moveable relative to one another about an imaginary hinge axis of the hinge assembly extending in a lateral direction. The first and second frame elements of the hinge assembly are linked by a tape spring structure allowing the hinge assembly to take at least two configurations. More specifically, according to this second aspect of the invention, the tape spring structure includes at least one bistable laminate element that is configurable to take either one of two stable states, namely, an unfolded state in which the bistable laminate element extends predominantly rectilinearly in a longitudinal direction, perpendicular to the lateral direction, and a folded state in which the bistable laminate element is curved about an imaginary axis parallel to the imaginary hinge axis and forms a fold angle within a hinge plane perpendicular to the imaginary hinge axis. Furthermore, the hinge assembly further comprises an actuating system to selectively and reversibly switch the at least one bistable laminate element from the unfolded state to the folded state, and vice versa.

By way of preference, the aforementioned actuating system includes first and second actuators that are arranged in an antagonist manner such that the first actuator controls switching of each bistable laminate element to the unfolded state and the second actuator controls switching of each bistable laminate element to the folded state.

In accordance with a particularly preferred embodiment, the first and second frame elements each exhibit first and second actuation arms extending outwardly, in distinct directions, away from a location of each bistable laminate element. Furthermore, the first actuator is coupled between the first actuation arm of the first frame element and the first actuation arm of the second frame element to selectively bring each bistable laminate element to the unfolded state. Conversely, the second actuator is coupled between the second actuation arm of the first frame element and the second actuation arm of the second frame element to selectively bring each bistable laminate element to the folded state.

The first and second actuators may especially be SMA actuators based on shape memory alloys (SMAs). With respect to the preferred embodiment mentioned in the preceding paragraph, the first and second actuators may in particular be SMA tension springs.

The hinge assembly may furthermore comprise a heating and cooling system to selectively supply heat to or remove heat from the first and second actuators to cause actuation of the hinge assembly.

In accordance with another embodiment of the invention, the hinge assembly further comprises a guiding or constraining mechanism to guide or constrain relative movement of the first and second hinge parts upon switching the hinge assembly between the first and second stable configurations.

Also claimed is a deployable and/or reconfigurable structure for aerospace application comprising at least two articulated segments joined by an articulation comprising a hinge assembly in accordance with the invention. Each articulated segment may especially be made of lightweight material, such as carbon fibre reinforced polymer (CFRP).

There is further claimed an inspection and/or illumination arm for aerospace application comprising the aforementioned deployable and/or reconfigurable structure and an inspection and/or illumination device supported at one end of the deployable and/or reconfigurable structure.

Further advantageous embodiments of the invention form the subject-matter of the dependent claims and are discussed below.

BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:

Figures 1A-C show a hinge assembly composed of a stack of two monostable tape springs and rolamite guiding cams, which hinge assembly forms part of the state of the art;

Figure 2A is a photographic illustration of four samples of bistable laminate elements with distinct tape spring properties shown in a first of two stable states, namely, an unfolded (stiff) state;

Figure 2B is a photographic illustration of the four samples of bistable laminate elements of Figure 2A shown in the second stable state, namely, a folded (lower stiffness) state;

Figure 3A is a sketch of an exemplary hinge relying upon the use of a single bistable laminate element, here shown in the unfolded state;

Figure 3B is a sketch of the exemplary hinge of Figure 3A showing the bistable laminate element in the folded state;

Figure 4 is a schematic diagram of three illustrative configurations of bistable laminate elements with different tape spring properties, namely, (a) smallest fold angle, (b) stiffest folded state, and (c) high fold angle, which diagram lists indicative fold angles and stiffness values for each bistable laminate element, stiffness being evaluated in terms of the natural frequency of each bistable laminate element in the unfolded and folded states;

Figures 5A-B are schematic diagrams illustrating the underlying principle of a hinge assembly in accordance with a first aspect of the invention, which hinge assembly includes a tape spring structure with first and second bistable laminate elements with distinct tape spring properties that are designed and arranged in kinematically compatible configurations such that the hinge assembly can take a first stable configuration, as shown in Figure 5A, or a second stable configuration, as shown in Figure 5B;

Figure 6 is a schematic perspective view of a finite element (FE) model of a hinge assembly configured in accordance with the principle shown in Figures 5A-B;

Figure 7 is a schematic perspective view of two hinge assemblies configured in accordance with the principle shown in Figures 5A-B, Figure 7 depicting a first hinge assembly, in the foreground, shown in the first stable configuration, and a second hinge assembly, in the background, shown in the second stable configuration;

Figure 8A is a photographic illustration of a prototype of a hinge assembly configured in accordance with the principle shown in Figures 5A-B, according to another embodiment of the invention;

Figure 8B is a photographic illustration of another prototype of a hinge assembly configured in accordance with the principle shown in Figures 5A-B, according to another embodiment of the invention;

Figure 9 is a schematic diagram illustrating the selective, reversible actuation of a bistable laminate element using a pair of antagonist actuators based on SMA wires; and

Figure 10 is a photographic illustration of a hinge assembly provided with a guiding/constraining mechanism to guide or constrain relative movement of first and second hinge parts upon switching the hinge assembly between the first and second stable configurations.

## DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as reflected in the appended claims.

As described herein, when two or more parts or components are described as being connected, attached, secured or coupled to one another, they can be so connected, attached, secured or coupled directly to each other or through one or more intermediary parts.

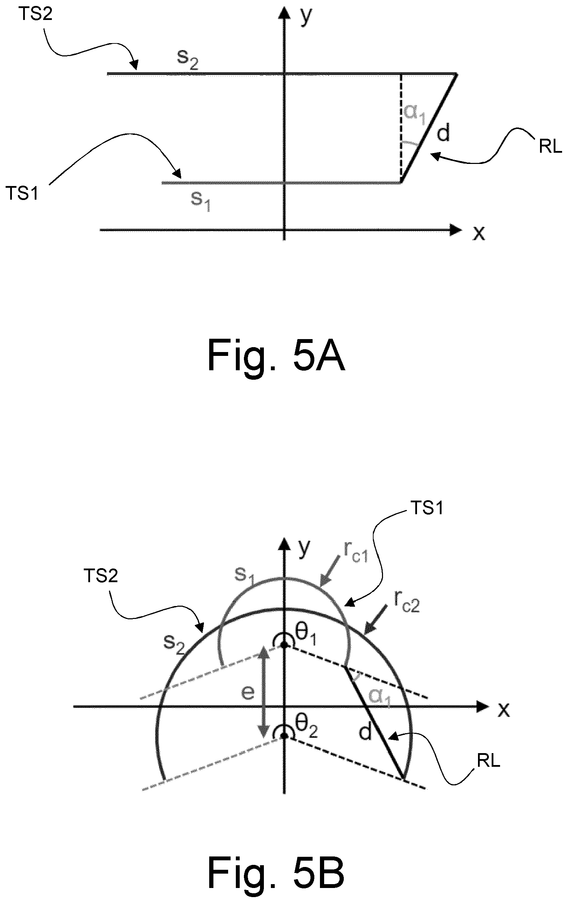

With respect to a first aspect of the invention, a new strategy to improve stiffness of the hinge assembly in both stable configurations is being proposed, which new strategy is based on the use of a tape spring structure to link the two hinge parts of the hinge assembly that includes a combination of a least two bistable laminate elements with distinct tape spring properties, which bistable laminate elements are designed and arranged in kinematically compatible configurations such that the hinge assembly can take any one of first and second stable configurations. The underlying principle will be explained with reference to Figures 5A and 5B which schematically a hinge assembly in accordance with the first aspect of the invention.

More specifically, Figures 5A and 5B schematically illustrate the hinge assembly in the two stable configurations, namely, the unfolded (stiffer) configuration (Figure 5A) and the folded (less stiff) configuration (Figure 5B), with relevant geometric parameters being highlighted that define kinematic compatibility equations, indicated below, that should ideally be satisfied to ensure proper operation of the resulting hinge assembly.

Geometric parameters $s_1$ and $s_2$ in Figures 5A-B respectively designate the length of the first and second bistable laminate elements TS1, TS2, while geometric parameters $r_{c1}$ and $r_{c2}$ in Figure 5B respectively designate the radius of curvature of the first and second bistable laminate elements TS1, TS2 in the folded state. $\theta_1$ and $\theta_2$ in Figure 5B are the relevant fold angles of the first and second bistable laminate elements TS1, TS2 in the folded state. Parameter e in Figure 5B designates the eccentricity as measured between the centers of curvature of the first and second bistable laminate elements TS1, TS2 in the folded state.

It is further assumed, in this particular case, that the bistable laminate elements TS1, TS2 extend predominantly rectilinearly in the longitudinal direction x (i.e. parallel to the x-axis, as shown in Figure 5A) and that the bistable laminate elements TS1, TS2 are curved about an imaginary axis parallel to the imaginary hinge axis of the resulting hinge assembly (i.e. an axis extending in the lateral direction z, perpendicular to the x-y plane, or "hinge plane") to form the relevant fold angle $\theta_1$, resp. $\theta_2$, within the hinge plane x-y (as shown in Figure 5B). Furthermore, it should be appreciated that the two bistable laminate elements TS1, TS2 are offset laterally, along the lateral direction z, to allow for unimpeded switching of both bistable laminate elements TS1, TS2 between their two equilibrium states, as well as vertically, along the vertical direction y (as shown in Figure 5A).

In this particular, preferred context, it is assumed that the two bistable laminate elements TS1, TS2 are combined structurally such that a rigid link RL is provided between respective ends of the first and second bistable laminate elements, as schematically depicted in Figures 5A-B (only one rigid link RL being shown for the sake of illustration). In the illustrated example, in order for the combined arrangement of the two bistable laminate elements TS1, TS2 to be kinematically compatible, i.e. to allow the result hinge assembly to be switchable from one stable configuration to the other, and vice versa, certain conditions should ideally be met. In particular, the length d of the rigid link RL should remain the same in both configurations. Similarly, the angle $\alpha_1$ should likewise remain the same in both configurations. From the geometries of the initial and final configurations, it can be shown that the bistable laminate elements TS1, TS2 should satisfy the following conditions for the resulting hinge assembly to retain bistability, namely:

$$s_1 = r_{c1} \frac{s_2}{r_{c2}} \qquad (1)$$

$$s_2 = \frac{r_{c2}}{r_{c1}} \left( s_2 - 2e \sin \frac{s_2}{2r_{c2}} \right) \qquad (2)$$

Depending on the relevant layup, geometric parameters $r_{c1}$ and $r_{c2}$ can be calculated as a function of $f(r_{m1})$ and $f(r_{m2})$, respectively, which functions can be obtained from the analytical model of composite tape springs developed by Simon D. GUEST et al. in "Analytical models for bistable cylindrical shells", Proceedings of the Royal Society A: Mathematical, Physical and Engineering Sciences, Volume 462, Number 2067, pp. 839-854, January 10, 2006 (https://www.istor.org/stable/20208915), which publication is incorporated herein by reference in its entirety.

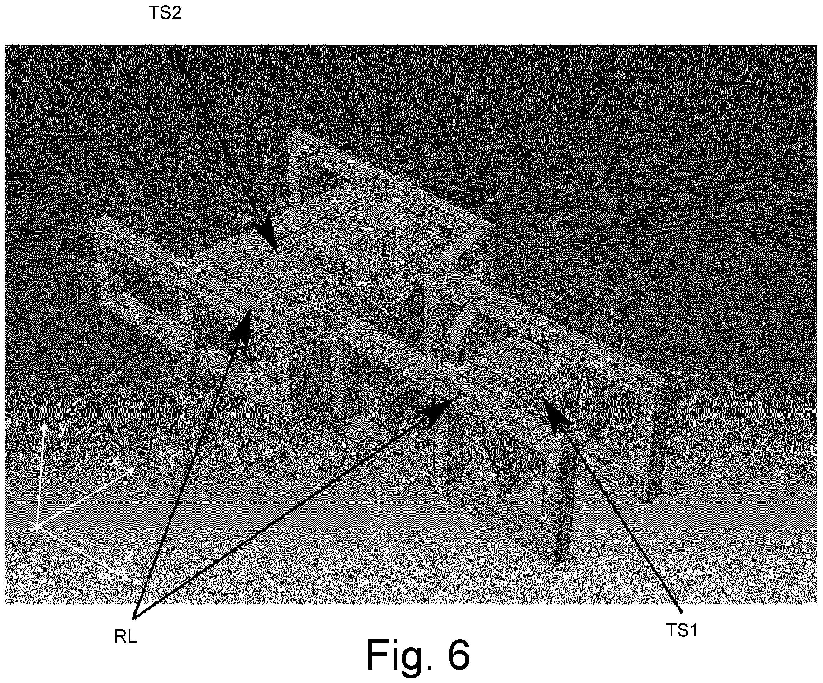

The aforementioned case is applicable in the particular context shown in Figures 5A-B (which underlying principle is replicated in the actual hinge assemblies that will be discussed with reference to Figures 6 to 8A-B), but it will be understood that other geometric and/or structural combinations could potentially be contemplated while ensuring kinematic compatibility between the first and second bistable laminate elements.

Figure 6 is a schematic perspective view of a finite element (FE) model of a hinge assembly configured in accordance with the principle shown in Figures 5A-B. More specifically, Figure 6 shows the three-dimensional arrangement of the first and second bistable laminate elements TS1, TS2 that are coupled at both ends to frame elements acting as rigid links RL. In Figure 6, the resulting hinge assembly is shown in the unfolded configuration, with both bistable laminate elements TS1, TS2 taking the unfolded (stiffer) state, namely, in a configuration matching the depiction shown schematically in Figure 5A.

A finite element (FE) analysis conducted on the basis of the hinge assembly shown in Figure 6 allows to reach the following conclusions and make the following observations:

- the combination of the two bistable laminate elements TS1, TS2 substantially improves stiffness in both equilibrium states and provides a viable means of increasing the design space; for the sake of illustration, the highest achievable stiffness (likewise quantified in terms of the natural frequency $f_0$ of the resulting structure) for bistable composite laminate elements with the layup [-45/45/0/0/-45/45] (for both elements) could be more than doubled thanks to this new strategy, namely, from 69 Hz to 132 Hz in the unfolded (stiffer) state and from 4.8 Hz to 12.5 Hz in the folded (less stiff) state;

- while stiffness of the resulting hinge assembly is improved substantially, the range of motion that could be achieved is not compromised; fold angles in the range of 17° to 180° could likewise be achieved, much like with the single tape spring configuration; and

- the new strategy leads to an increase in the snap-through necessary to switch from one stable configuration to the other, thus requiring a more involved - i.e. more powerful - actuation system.

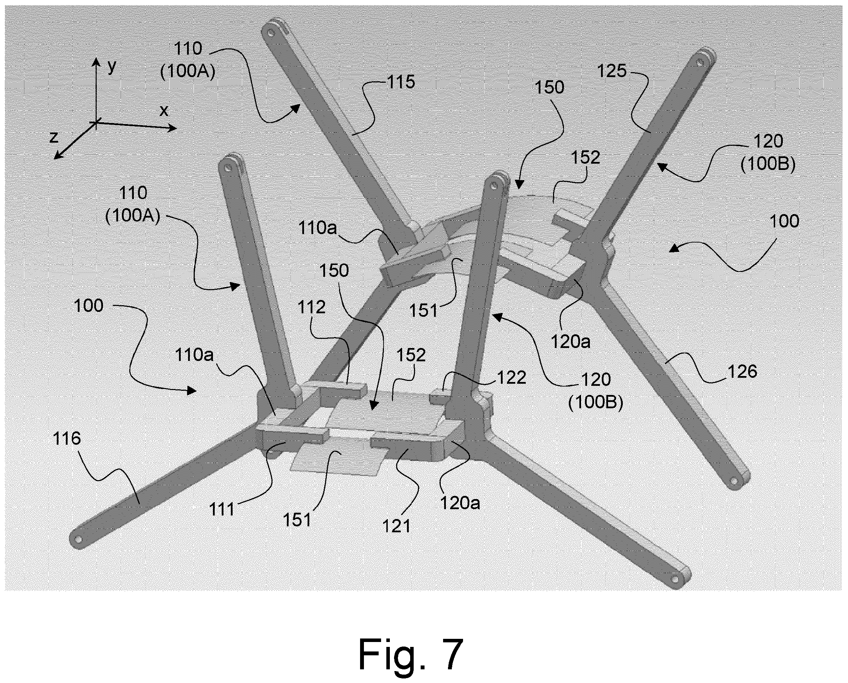

Figure 7 is a schematic perspective view of two hinge assemblies, each designated by reference numeral 100, configured in accordance with the principle shown in Figures 5A-B. Figure 7 in effects depicts a first hinge assembly 100, in the foreground, shown in the first stable configuration, and a second hinge assembly 100, in the background, shown in the second stable configuration.

More specifically, the hinge assembly 100 comprises first and second frame elements 110, 120 forming first and second hinge parts 100A, 100B of the hinge assembly 100 that are moveable relative to one another about an imaginary hinge axis of the hinge assembly 100 extending in the lateral direction z. The first and second frame elements 110, 120 are linked by a tape spring structure 150 allowing the hinge assembly 100 to take the two stable configurations shown in the foreground and the background. More specifically, the tape spring structure 150 includes the first and second bistable laminate elements, designated by reference signs 151 and 152, respectively, which bistable laminate elements 151, 152 are shown in the unfolded (stiffer) equilibrium state in the foreground and in the folded (less stiff) equilibrium state in the background.

It will once again be understood that, in the unfolded state, each bistable laminate element 151, 152 extends predominantly rectilinearly in the longitudinal direction x (perpendicular to the lateral direction z) and that, in the folded state, each bistable laminate element 151, 152 is curved about an imaginary axis parallel to the imaginary hinge axis and forms a fold angle within the hinge plane x-y (perpendicular to the imaginary hinge axis).

In accordance with this preferred embodiment, shown in Figure 7, the first bistable laminate element 151 links a first portion 111 of the first frame element 110 to a first portion 121 of the second frame element 120 and the second bistable laminate element 152 similarly links a second portion 112 of the first frame element 110 to a second portion 122 of the second frame element 120. Advantageously, each of the first and second frame elements 110, 120 exhibits a connecting section shaped as a fork 110a, resp. 120a, to form the first and second portions 111, 112, resp. 121, 122 that are coupled to each relevant end of the first and second bistable laminate elements 151, 152.

By way of preference, the first and second bistable laminate elements 151, 152 are composite laminates exhibiting different geometric parameters and/or different layups, it being once again understood that there is flexibility to adjust these parameters to achieve the desired stiffnesses and fold angle.

Figure 7 further shows an advantageous further feature of the hinge assembly 100 in accordance with this preferred embodiment, namely, the fact that the first and second frame elements 110, 120 each further exhibit first and second actuation arms 115, 116, resp. 125, 126, extending outwardly, in distinct directions, away from a location of the bistable laminate elements 151, 152. As the name suggests, actuation arms 115, 116, 125, 126 are used to advantageously provide adequate points of attachment to position corresponding actuators (not shown in Figure 7) of an actuating system designed to selectively and reversibly switch each of the first and second bistable laminate elements 151, 152 from the unfolded state to the folded state, and vice versa.

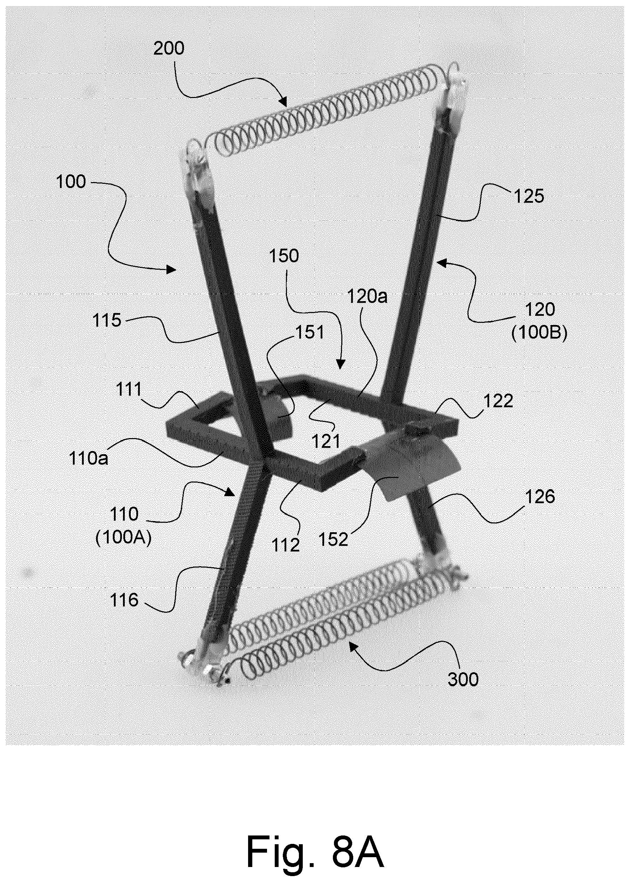

Figure 8A is a photographic illustration of a prototype of a hinge assembly 100 configured in accordance with the principle shown in Figures 5A-B, according to another embodiment of the invention, which hinge assembly 100 is designed along the same general configuration as already discussed with reference to Figure 7. The same reference numerals as previously discussed accordingly designate the same structural components of the hinge assembly 100, without it being necessary to discuss the same again.

In the photographic illustration of Figure 8A, one can note the presence of an actuating system 200/300 to selectively and reversibly switch each of the first and second bistable laminate elements 151, 152 from the unfolded state to the folded state, and vice versa. More specifically, the actuating system 200/300 includes first and second actuators 200, 300 that are arranged in an antagonist manner such that the first actuator 200 controls switching of each bistable laminate element 151, 152 to the unfolded state and the second actuator 300 controls switching of each bistable laminate element 151, 152 to the folded state. As shown, the first actuator 200 is coupled between the first actuation arm 115 of the first frame element 110 and the first actuation arm 125 of the second frame element 120 to selectively bring each bistable laminate element 151, 152 to the unfolded state, while the second actuator 300 is coupled between the second actuation arm 116 of the first frame element 110 and the second actuation arm 126 of the second frame element 120 to selectively bring each bistable laminate element 151, 152 to the folded state.

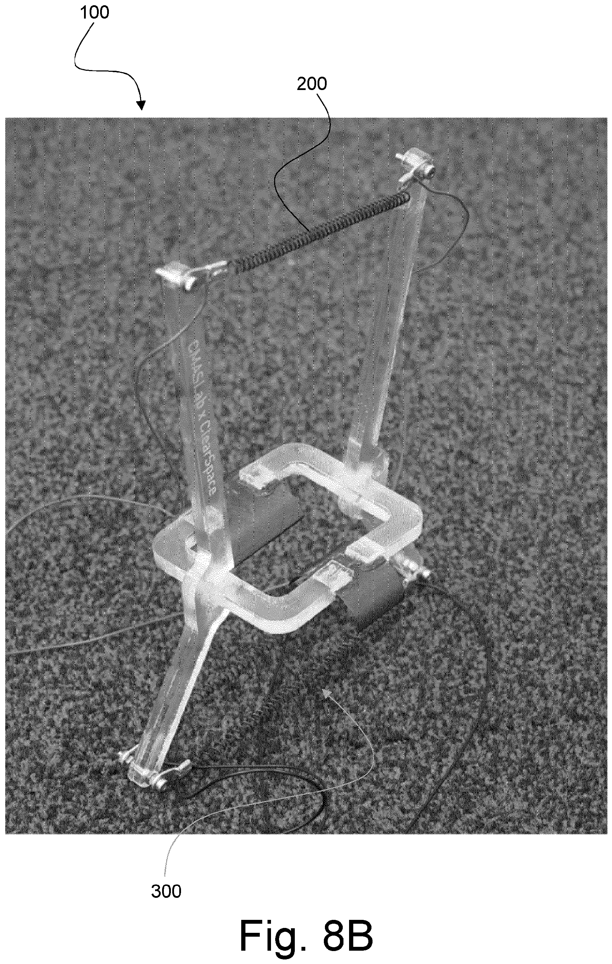

Figure 8B is a photographic illustration of another prototype of the hinge assembly 100 configured in accordance with the principle shown in Figures 5A- B, which is structurally similar to the hinge assembly 100 shown in Figure 8A.

The main difference between the two prototypes shown in Figures 8A and 8B resides in the type of material used to form the frame elements 110, 120.

In both instances, the first and second actuators 200, 300 are SMA actuators that are based on shape memory alloys (SMAs), namely, SMA tension springs. In the illustrated example, one may note that the first actuator 200 in essence consists of a single SMA tension spring, while the second actuator 300 in essence consists of a pair of SMA tension springs arranged in parallel between the actuation arms 116, 126. This asymmetric arrangement basically owes to the fact that the second actuator 300 is used to switch the bistable laminate elements 151, 152 from the stiffer, unfolded state to the folded state, and therefore requires more actuation force to do so.

Control of the SMA actuators 200, 300 may take place in a manner known as such in the art, namely, by providing a suitable heating and cooling system to selectively supply heat to or remove heat from the first and second actuators 200, 300 to cause actuation of the hinge assembly 100 from one stable configuration to the other, and vice versa.

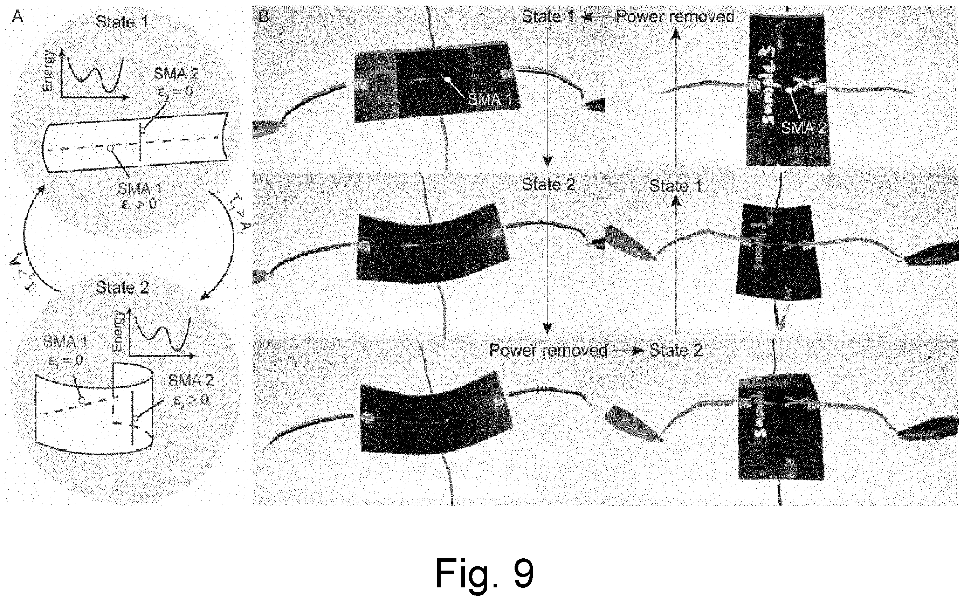

Within the scope of the present invention, other actuation systems could potentially be contemplated. Figure 9 for instance shows another actuation principle which involves the provision of two antagonist SMA wires SMA1, SMA2 arranged at right angles along the length and width of a bistable laminate element to control switching between the two stable states. By providing power to one or the other SMA wires, one could selectively and reversibly control switching of the bistable laminate element from the first state to the second state and back from the second state to the first state. Such principle could potentially be employed to cause simultaneous actuation of each bistable laminate element 151, 152 in the aforementioned hinge assemblies 100 shown in Figures 6 to 8A-B, in which case the actuation arms 115, 116, 125, 126 visible in Figures 7 and 8A-B could be omitted. Actuation efficiency and efficacy are however comparatively better with the actuating system 200/300 discussed with reference to Figures 8A-B, which actuating system 200/300 is furthermore more robust.

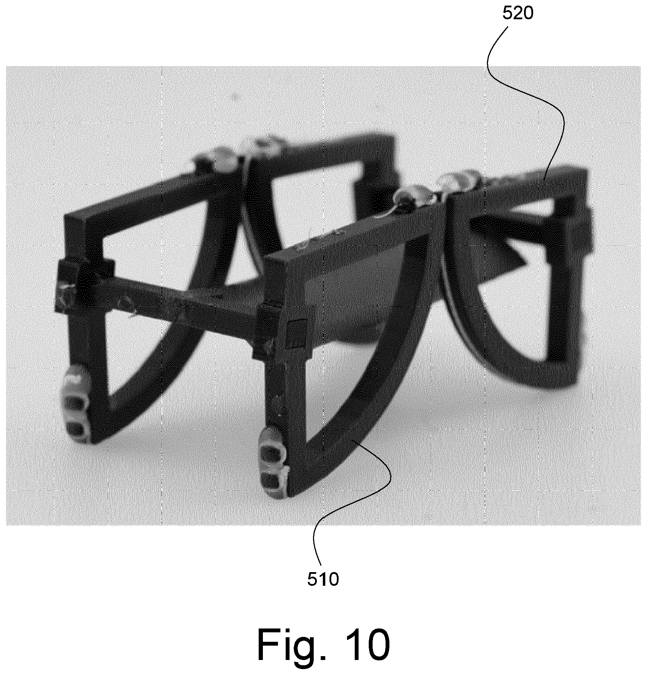

It is to be appreciated and understood that stiffness of the hinge assembly of the invention could be further improved, if necessary, by the provision of adhoc devices or mechanisms, such as a guiding or constraining mechanism to guide or constrain relative movement of the first and second hinge parts of the hinge assembly upon switching the hinge assembly between the first and second stable configuration. In that regard, a rolamite mechanism similar to that contemplated in the context of the TSR hinge discussed in the preamble could for instance be contemplated. Figure 10 illustrates such a rolamite mechanism applied to a single tape spring hinge assembly, which rolamite mechanism comprises a pair of guiding/constraining cam structures 510, 520 wrapped at least partly with guiding wires, which hinge assembly is functionally similar to the aforementioned TSR hinge. Such guiding or constraining mechanism 510/520 could perfectly be contemplated as a further structural addition to the hinge assembly of the invention.

As already mentioned, it is especially contemplated to use the hinge assembly of the invention as part of the articulation joining one or multiple pairs of articulated segments of a deployable and/or reconfigurable structure for aerospace application, such as but not limited to the deployment of operational elements of a spacecraft, including solar panels, antennas, deployable booms and the like. In that regard, each articulated segment is preferably made of lightweight material, such as carbon fibre reinforced polymer (CFRP).

One specific application that is particularly contemplated in the context of the invention is an inspection and/or illumination arm for aerospace application that comprises a deployable and/or reconfigurable structure as discussed above and an inspection and/or illumination device supported at one end of the deployable and/or reconfigurable structure.

Various modifications and/or improvements may be made to the above-described embodiments without departing from the scope of the invention as defined by the appended claims.

For instance, while SMA actuators are preferably contemplated as actuators, other types of actuators could be contemplated without departing from the scope of the invention as defined by the appended claims. Especially, other energy-dense smart materials like macro-fiber composites (MFCs) and electro-active polymers (EAPs) could be contemplated.

Furthermore, implementation of the fully reversible actuation methodology described above does not necessarily rely on the use of two (or more) bistable laminate elements as tape spring structure, hence the reason why this other aspect of the invention is also claimed independently from the first aspect.

LIST OF REFERENCE NUMERALS AND SIGNS USED THEREIN

| 1 | tape-spring rolling (TSR) hinge assembly (prior art of Figures 1A-C) |
|---|---|
| 5 | pair of monostable steel tape springs of TSR hinge assembly 1 stacked one above the other |
| 6 | (first) guiding cam (component of rolamite hinge mechanism) forming part of (first) hinge part of TSR hinge assembly 1 |
| 7 | (second) guiding cam (component of rolamite hinge mechanism) forming part of (second) hinge part of TSR hinge assembly 1 |
| 16, 17 | wires holding guiding cams 6, 7 together (components of rolamite hinge mechanism) |
| 100 | hinge assembly |
| 100A | (first) hinge part of hinge assembly 100 |
| 100B | (second) hinge part of hinge assembly 100 |
| 110 | (first) frame element forming (first) hinge part 100A of hinge assembly 100 |
| 110a | connecting section (fork section) of frame element 110 coupled to one end of first and second bistable laminate elements 151, 152 |
| 111 | first portion of frame element 110 coupled to one end of (first) bistable laminate element 151 |
| 112 | second portion of frame element 110 coupled to one end of (second) bistable laminate element 152 |
| 115 | (first) actuation arm of frame element 110 coupled to (first) actuator 200 |
| 116 | (second) actuation arm of frame element 110 coupled to (second) actuator 300 |

| 120 | (second) frame element forming (second) hinge part 100B of hinge assembly 100 |
|---|---|
| 120a | connecting section (fork section) of frame element 120 coupled to other end of first and second bistable laminate elements 151, 152 |
| 121 | first portion of frame element 120 coupled to other end of (first) bistable laminate element 151 |
| 122 | second portion of frame element 120 coupled to other end of (second) bistable laminate element 152 |
| 125 | (first) actuation arm of frame element 120 coupled to (first) actuator 200 |
| 126 | (second) actuation arm of frame element 120 coupled to (second) actuator 300 |
| 150 | tape spring structure linking first and second frame element 110, 120 |
| 151 | (first) bistable laminate element (part of tape spring structure 150) |
| 152 | (second) bistable laminate element (part of tape spring structure 150) |
| 200 | (first) actuator (part of actuating system 200/300) for switching of bistable laminate elements 151, 152 to unfolded state (e.g. SMA tension spring) |
| 300 | (second) actuator (part of actuating system 200/300) for switching of bistable laminate elements 151, 152 to folded state (e.g. pair of SMA tension springs) |
| 510 | guiding/constraining cam structure (part of guiding/constraining mechanism 510/520) |
| 520 | guiding/constraining cam structure (part of guiding/constraining mechanism 510/520) |
| L | length of bistable laminate element (first geometric parameter - Figure 3A) |
| W | width of bistable laminate element (second geometric parameter - Figure 3A) |
| R | mould radius of bistable laminate element (third geometric parameter - Figure 3A) |
| $\theta$ | fold angle of bistable laminate element (in the folded state) (Figure 3B) |
| x | x-axis of Cartesian coordinate system / longitudinal direction (perpendicular to imaginary hinge axis of hinge assembly 100) / direction of extension of bistable laminate elements 151, 152 in the unfolded state |
| y | y-axis of Cartesian coordinate system / vertical direction (perpendicular to imaginary hinge axis of hinge assembly 100) |
| z | z-axis of Cartesian coordinate system / lateral direction (parallel to imaginary hinge axis of hinge assembly 100) |
| x-y | hinge plane formed by x-axis and y-axis (plane perpendicular to imaginary hinge axis of hinge assembly 100) |
| TS1 | first bistable laminate element (part of tape spring structure) |
| TS2 | second bistable laminate element (part of tape spring structure) |
| $s_1$ | length of first bistable laminate element TS1 as measured within hinge plane x-y (Figures 5A-B) |
| $s_2$ | length of second bistable laminate element TS2 as measured within hinge plane x-y (Figures 5A-B) |
| $r_{c1}$ | radius of curvature of first bistable laminate element TS1 in the folded state (Figure 5B) |
| $r_{c2}$ | radius of curvature of second bistable laminate element TS2 in the folded state (Figure 5B) |
| $e$ | eccentricity as measured between centers of curvature of first and second bistable laminate elements TS1, TS2 in the folded state (Figure 5B) |
| RL | rigid link connecting the first and second bistable laminate elements TS1, TS2 (Figures 5A-B) |
| $d$ | length of rigid link RL (Figures 5A-B) |
| $\alpha_1$ | angle formed by rigid link RL (Figures 5A-B) |
| $\theta_1$ | fold angle of first bistable laminate element TS1 (in the folded state) about imaginary axis parallel to imaginary hinge axis of hinge assembly 100 (Figure 5B) |
| $\theta_2$ | fold angle of second bistable laminate element TS2 (in the folded state) about imaginary axis parallel to imaginary hinge axis of hinge assembly 100 (Figure 5B) |

**Claims**

1. A hinge assembly (100) suitable for aerospace application comprising first and second frame elements (110, 120) forming first and second hinge parts (RL; 100A, 100B) of the hinge assembly (100) that are moveable relative to one another about an imaginary hinge axis of the hinge assembly (100) extending in a lateral direction (z),

   wherein the first and second frame elements (110, 120) of the hinge assembly (100) are linked by a tape spring structure (TS1/TS2; 150) allowing the hinge assembly (100) to take at least two configurations, **characterized in that** the tape spring structure (TS1/TS2; 150) includes first and second bistable laminate elements (TS1, TS2; 151, 152) with distinct tape spring properties, each of the first and second bistable laminate elements (TS1, TS2; 151, 152) being configurable to take either one of two stable states, namely, an unfolded state in which each bistable laminate element (TS1, TS2; 151, 152) extends predominantly rectilinearly in a longitudinal direction (x), perpendicular to the lateral direction (z), and a folded state in which each bistable laminate element (TS1, TS2; 151, 152) is curved about an imaginary axis parallel to the imaginary hinge axis and forms a fold angle ($\theta_1$ $\theta_2$) within a hinge plane (x-y) perpendicular to the imaginary hinge axis,

and **in that** the first and second bistable laminate elements (TS1, TS2; 151, 152) are designed and arranged in kinematically compatible configurations such that the hinge assembly (100) can take any one of a first stable configuration, when the first and second bistable laminate elements (TS1, TS2; 151, 152) are both in the unfolded state, and a second stable configuration, when the first and second bistable laminate elements (TS1, TS2; 151, 152) are both in the folded state.

2. The hinge assembly (100) according to claim 1, wherein the first and second bistable laminate elements (TS1, TS2; 151, 152) are offset laterally, along the lateral direction (z), as well as vertically, along a vertical direction (y), perpendicular to the longitudinal direction (x) and the lateral direction (z).

3. The hinge assembly (100) according to claim 2, wherein the first and second bistable laminate elements (TS1, TS2; 151, 152) are designed to satisfy the following conditions:

$$s_1 = r_{c1} \frac{s_2}{r_{c2}} \tag{1}$$

$$s_2 = \frac{r_{c2}}{r_{c1}} \left( s_2 - 2e \sin \frac{s_2}{2r_{c2}} \right) \tag{2}$$

where $s_1$ and $s_2$ are respectively a length of the first and second bistable laminate elements (TS1, TS2; 151, 152) as measured within the hinge plane (x-y), $r_{c1}$ and $r_{c2}$ are respectively a radius of curvature of the first and second bistable laminate elements (TS1, TS2; 151, 152) in the folded state, and e is an eccentricity as measured between centers of curvature of the first and second bistable laminate elements (TS1, TS2; 151, 152) in the folded state.

4. The hinge assembly (100) according to any one of the preceding claims, wherein the first bistable laminate element (TS1; 151) links a first portion (111) of the first frame element (110) to a first portion (121) of the second frame element (120) and the second bistable laminate element (TS2; 152) links a second portion (112) of the first frame element (110) to a second portion (122) of the second frame element (120),
and wherein the first frame element (110) preferably exhibits a first connecting section shaped as a fork (110a) to form the first and second portions (111, 112) of the first frame element (110) that are coupled to one end of the first and second bistable laminate elements (TS1, TS2; 151, 152), respectively, while the second frame element (120) preferably exhibits a second connecting section shaped as a fork (120a) to form the first and second portions (121, 122) of the second frame element (120) that are coupled to another end of the first and second bistable laminate elements (TS1, TS2; 151, 152), respectively.

5. The hinge assembly (100) according to any one of the preceding claims, wherein the first and second bistable laminate elements (TS1, TS2; 151, 152) are composite laminates exhibiting different geometric parameters (L, W, R), and/or wherein the first and second bistable laminate elements (TS1, TS2; 151, 152) are composite laminates exhibiting different layups.

6. The hinge assembly (100) according to any one of the preceding claims, further comprising an actuating system (200/300) to selectively and reversibly switch each of the first and second bistable laminate elements (TS1, TS2; 151, 152) from the unfolded state to the folded state, and vice versa.

7. A hinge assembly (100) suitable for aerospace application comprising first and second frame elements (110, 120) forming first and second hinge parts (RL; 100A, 100B) of the hinge assembly (100) that are moveable relative to one another about an imaginary hinge axis of the hinge assembly (100) extending in a lateral direction (z),

wherein the first and second frame elements (110, 120) of the hinge assembly (100) are linked by a tape spring structure (TS1/TS2; 150) allowing the hinge assembly (100) to take at least two configurations,
**characterized in that** the tape spring structure (TS1/TS2; 150) includes at least one bistable laminate element (TS1, TS2; 151, 152) that is configurable to take either one of two stable states, namely, an unfolded state in which the bistable laminate element (TS1, TS2; 151, 152) extends predominantly rectilinearly in a longitudinal direction (x), perpendicular to the lateral direction (z), and a folded state in which the bistable laminate element (TS1, TS2; 151, 152) is curved about an imaginary axis parallel to the imaginary hinge axis and forms a fold angle ($\theta_1$ $\theta_2$) within a hinge plane (x-y) perpendicular to the imaginary hinge axis,

and **in that** the hinge assembly (100) further comprises an actuating system (200/300) to selectively and reversibly switch the at least one bistable laminate element (TS1, TS2; 151, 152) from the unfolded state to the folded state, and vice versa.

8. The hinge assembly (100) according to claim 6 or 7, wherein the actuating system (200/300) includes first and second actuators (200, 300) that are arranged in an antagonist manner such that the first actuator (200) controls switching of each bistable laminate element (TS1, TS2; 151, 152) to the unfolded state and the second actuator (300) controls switching of each bistable laminate element (TS1, TS2; 151, 152) to the folded state.

9. The hinge assembly (100) according to claim 8, wherein the first and second frame elements (110, 120) each exhibit first and second actuation arms (115, 116, 125, 126) extending outwardly, in distinct directions, away from a location of each bistable laminate element (TS1, TS2; 151, 152),

wherein the first actuator (200) is coupled between the first actuation arm (115) of the first frame element (110) and the first actuation arm (125) of the second frame element (120) to selectively bring each bistable laminate element (TS1, TS2; 151, 152) to the unfolded state, and
wherein the second actuator (300) is coupled between the second actuation arm (116) of the first frame element (110) and the second actuation arm (126) of the second frame element (120) to selectively bring each bistable laminate element (TS1, TS2; 151, 152) to the folded state.

10. The hinge assembly (100) according to claim 8 or 9, wherein the first and second actuators (200, 300) are SMA actuators based on shape memory alloys (SMAs).

11. The hinge assembly (100) according to claims 9 and 10, wherein the first and second actuators (200, 300) are SMA tension springs.

12. The hinge assembly (100) according to claim 10 or 11, further comprising a heating and cooling system to selectively supply heat to or remove heat from the first and second actuators (200, 300) to cause actuation of the hinge assembly (100).

13. The hinge assembly (100) according to any one of the preceding claims, further comprising a guiding or constraining mechanism (510/520) to guide or constrain relative movement of the first and second hinge parts (RL; 100A, 100B) upon switching the hinge assembly (100) between the first and second stable configurations.

14. A deployable and/or reconfigurable structure for aerospace application comprising at least two articulated segments joined by an articulation comprising a hinge assembly (100) in accordance with any one of the preceding claims, wherein each articulated segment is preferably made of lightweight material, such as carbon fibre reinforced polymer (CFRP).

15. An inspection and/or illumination arm for aerospace application comprising a deployable and/or reconfigurable structure according to claim 14 and an inspection and/or illumination device supported at one end of the deployable and/or reconfigurable structure.

# Fig. 1A
## (PRIOR ART)

# Fig. 1B
## (PRIOR ART)

Fig. 1C
(PRIOR ART)

Fig. 2A

Fig. 2B

Fig. 3A

Fig. 3B

Fig. 4

Fig. 5A

Fig. 5B

EP 4 321 443 A1

y
x
z

RL

TS1

Fig. 6

Fig. 7

EP 4 321 443 A1

Fig. 8A

100

200

300

Fig. 8B

Fig. 9

Fig. 10

Europäisches
Patentamt

European
Patent Office

Office européen
des brevets

# EUROPEAN SEARCH REPORT

Application Number

EP 22 18 9602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Slade R ET AL: "A LARGE SELF-DEPLOYING STRUCTURE CONCEPT FOR SPACE TELESCOPE MISSIONS", , 28 September 2011 (2011-09-28), pages 465-472, XP093017797, Retrieved from the Internet: URL:https://www.esmatspapers/pastpapers/pdfs/2011/slade.pdf [retrieved on 2023-01-25] | 1,2,4,5, 13,14 | INV. B64G1/22 E05D1/00 E05F1/12 F16C11/12 |
| Y | * see section 2.2 Tape-Spring Hinges; page 466 – page 467; figure 3 * | 6-8,10, 12,15 | |
| A | ----- | 3,9,11 | |
| Y | SCHULTZ M R ET AL: "Neutrally stable behavior in fiber-reinforced composite tape springs", COMPOSITES PART A, ELSEVIER, AMSTERDAM, NL, vol. 39, no. 6, 1 June 2008 (2008-06-01), pages 1012-1017, XP022684327, ISSN: 1359-835X, DOI: 10.1016/J.COMPOSITESA.2008.03.004 [retrieved on 2008-03-26] * page 1012 * * page 1016 * ----- | 6-8,10, 12,15 | TECHNICAL FIELDS SEARCHED (IPC) B64G E05G E05D E05F F16C |
| Y | US 2003/041548 A1 (MERRIFIELD DONALD V [US]) 6 March 2003 (2003-03-06) * paragraph [0009] * ----- | 15 | |
| A | CN 114 537 711 A (BEIJING AIRCRAFT SPACE UNIV) 27 May 2022 (2022-05-27) * paragraph [0004] * ----- | 15 | |
| | -/-- | | |

The present search report has been drawn up for all claims

| Place of search | Date of completion of the search | Examiner |
|---|---|---|
| Munich | 26 January 2023 | Sodtke, Christof |

EPO FORM 1503 03.82 (P04C01)

page 1 of 2

Europäisches
Patentamt

European
Patent Office

Office européen
des brevets

# EUROPEAN SEARCH REPORT

Application Number

EP 22 18 9602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEFFEN K A ET AL: "Folded orthotropic tape-springs", JOURNAL OF THE MECHANICS AND PHYSICS OF SOLIDS, PERGAMON PRESS, OXFORD, GB, vol. 123, 28 September 2018 (2018-09-28), pages 138-148, XP085572848, ISSN: 0022-5096, DOI: 10.1016/J.JMPS.2018.09.017 * see introduction * ----- | 1 | |
| A | US 2004/266502 A1 (HOLTORF JIM [US] ET AL) 30 December 2004 (2004-12-30) * paragraph [0015]; figure 4 * ----- | 1 | |

TECHNICAL FIELDS
SEARCHED (IPC)

The present search report has been drawn up for all claims

| Place of search | Date of completion of the search | Examiner |
|---|---|---|
| Munich | 26 January 2023 | Sodtke, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## EP 4 321 443 A1

## ANNEX TO THE EUROPEAN SEARCH REPORT
## ON EUROPEAN PATENT APPLICATION NO.

EP 22 18 9602

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2023

| Patent document cited in search report | | Publication date | Patent family member(s) | | Publication date |
|---|---|---|---|---|---|
| US 2003041548 | A1 | 06-03-2003 | NONE | | |
| CN 114537711 | A | 27-05-2022 | NONE | | |
| US 2004266502 | A1 | 30-12-2004 | AT | 429120 T | 15-05-2009 |
| | | | BR | PI0409460 A | 18-04-2006 |
| | | | CN | 1810011 A | 26-07-2006 |
| | | | EP | 1620953 A2 | 01-02-2006 |
| | | | JP | 4493651 B2 | 30-06-2010 |
| | | | JP | 2006525482 A | 09-11-2006 |
| | | | KR | 20060004675 A | 12-01-2006 |
| | | | US | 2004266502 A1 | 30-12-2004 |
| | | | WO | 2004095717 A2 | 04-11-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9822343 A1
- EP 0939727 B1
- US 6334235 B2

### Non-patent literature cited in the description

- Tape-Spring Rolling Hinges. **ALAN M. WATT et al.** Proceedings of the 36 Aerospace Mechanisms Symposium. Glenn Research Center, 15 May 2002
- APPLICATION OF "MAEVA" HINGE TO MYRIADE MICROSATELLITES DEPLOYMENTS NEEDS. **JACQUES SICRE et al.** Proceedings of the 11th European Space Mechanisms and Tribology Symposium. ESMATS, 21 September 2005
- Validation Report for the EO-1 Lightweight Flexible Solar Array Experiment. **BERNIE CARPENTER et al.** Technical Report. NASA Goddard Space Flight Center, 15 January 2001
- A novel tape spring hinge mechanism for quasi-static deployment of a satellite deployable using shape memory alloy. **JU WON JEONG et al.** Review of Scientific Instruments. AIP Publishing, February 2014, vol. 85, 025001
- **SEUNG-WON KIM et al.** Flytrap-inspired robot using structurally integrated actuation based on bistability and a developable surface. *Bioinspiration & Biomimetics,* 11 March 2014, vol. 9 (3), 9-036004, http://dx.doi.org/10.1088/1748-3182/9/3/036004
- **SAMIR A. EMAM et al.** A Review on Bistable Composite Laminates for Morphing and Energy Harvesting. *Applied Mechanics Reviews,* 11 December 2015, vol. 67 (6, https://dx.doi.org/10.1115/1.4032037
- **SIMON D. GUEST et al.** Analytical models for bistable cylindrical shells. *Proceedings of the Royal Society A: Mathematical, Physical and Engineering Sciences,* 10 January 2006, vol. 462 (2067), 839-854, https://www.istor.org/stable/20208915